# EUROPEAN PATENT SPECIFICATION

(11) **EP 1 733 811 B1**
(45) Date of publication and mention of the grant of the patent: **05.08.2009**
(21) Application number: 06115321.9
(22) Date of filing: 12.06.2006
(51) Int. Cl.: B09B 3/00, B02C 19/06

(54) **Process for packaging separation and granulation of processed food content thereof, and products and uses thereof**
Verfahren für Verpackungstrennung und Granulierung deren Lebensmittelinhalts, Erzeugnisse und deren Verwendung
Procédé pour séparation des emballages et granulation de leur contenu alimentaire, produits et leur utilisation

(30) Priority: 15.06.2005 US 152385
(43) Date of publication of application: 20.12.2006
(73) Proprietor: Kraft Foods Global, Inc., Northfield IL 60093 (US)
(72) Inventor: Shah, Manoj, Lindenhurst, IL 60046 (US); Neale, Kristin G., Milwaukee, WI 53202 (US); Janulis, Theodore N., Randolph, NJ 07869 (US); Poulos, Peter G., Stamford, CT 06903 (US); Brown, Mack W., Paterson, NJ 07501 (US)
(74) Representative: Smaggasgale, Gillian Helen

(56) References cited:
- WO-A-00/56460
- US-A- 2 390 678
- US-A- 3 596 842
- US-A- 5 848 754
- US-A1- 2006 045 951
- PATENT ABSTRACTS OF JAPAN vol. 2000, no. 23, 10 February 2001 (2001-02-10) -& JP 2001 149807 A (MORISHITA KIKAI KK), 5 June 2001 (2001-06-05)

## Description

### FIELD OF THE INVENTION

The invention generally relates to a process for simultaneously separating packaging from the processed food product contained inside while grinding the packaged. processed foods, and providing a granulated food product suitable for subsequent incorporation into other food products after separating out packaging fragments therefrom.

### BACKGROUND OF THE INVENTION

Significant volumes of product-in-package waste are generated in the packaging operation in manufacturing plants. This is because in the production of many types of packaged food products, some unused packaged foods may receive minor damage to either the packaging or the food product which cause it to be in an unsatisfactory condition to be sold to retailers or distributors. The food product itself is still wholesome but is not up to quality visual standards and instead of disposing the package of food it is desirable to re-use the food product. This often requires heating, mechanical grinding, milling or other processing steps to reform the processed food into a more convenient or stable form, which can lead to difficulties. Furthermore, a packaged food product must first be removed from its packaging before undergoing further processing steps to reform the food product. Manual separation of food product from package is costly, time-consuming, and waste material is usually not recycled.

Moreover, farinaceous (starch-containing) foods can be subject to gelatinization or other significant physico-chemical transformations upon heat treatment or exposure to heat associated with conventional grinding or milling operations. For commercial reasons, control of gelatinization of farinaceous material in some food systems is important as it may have a direct impact on final product quality, particularly product texture. In addition, the degree of gelatinization of farinaceous material in food systems also impacts the processing rheology of a starch melt/dough or similar foodstuff. This may affect the expansion and bubble growth kinetics of the food product. A farinaceous food material may not be economically and/or functionary useful in further processed food production if the original starch content becomes unduly degraded. ,

US5848754 describes a method and apparatus for separating packaging material from its contents. The method described is said to allow a clean separation of the packaging and contact materials so that each of these materials can be reused individually with substantially no further preparation. The apparatus described comprises a combination of a coarse cutter in the form of a shredder and a soft separator working on the drum and pressing belt principle with further line cutter or fragmented in the form of a lower mill arranged downstream of these. It is suggested that by coarsely cutting the packaging materials prior to compression, cavities in which amount of contents material may remain trapped cannot be formed. The soft separator can thus operate more effectively to cleanly separate the two materials.

Arrangements are needed for reforming packaged processed foods at a high recovery rate in a shelf-stable, food grade, functional form for re-use, with fewer process steps and equipment requirements, and a process that can provide a cost-efficient method to separate product from packaging, while simultaneously generating the reusable product. Less time to separate food from its packaging and an easier method of separating the two is needed. The invention addresses the above and other needs in an efficient and economically feasible manner.

### SUMMARY OF THE INVENTION

This invention provides a separation process for packaged processed food which simultaneously separates packaging from food content and generates particulated edible rework and packaging pieces which may be recyclable. The process makes it possible to grind packaged processed foods into separable fractions of re-usable food grade, functional particulate forms and fragmented packaging material during a common grinding process. The packaging enters the cyclone as a whole piece with the processed food product inside, and the break down of the package occurs while it is in the cyclone sufficient to release the food contents. Packaging and liberated food contents are acted upon by non-mechanical disintegration forces generated within the cyclone. This process performs the treatment in a short-duration operation that substantially preserves desirable functional aspects of the processed foods which are useful for food manufacture while allowing the packaging to be separated from the food. Grinding may be effected without the need to contact the processed food and packaging with any moving mechanical parts. In certain embodiments, essentially all the processed food material reformed in this manner may be incorporated into food products and the product packaging fragments may be recycled.

In one aspect, a food product obtained from this process incurs sufficiently limited molecular structural degradation during this process such that the product of this process is functionally and organoleptically acceptable to be used as rework. In one particular aspect, the food product comprises a processed food. For purposes herein, a "processed food" refers to a food material which has already undergone a physical or chemical change as part of a previous food treatment, such as a thermal treatment, causing the character thereof to be different from the original food material. Such processed foods tend to be more sensitive to further treatment, and thus generally may be less apt to tolerate it without undergoing significant structural degradation.

The packaging material type is not particularly limited other than it should be a material susceptible to disintegration or other structural break-down under processing conditions of an embodiment of this invention sufficient to release its food contents. For instance, the packaging material meeting this criterion may be a sleeve type packaging or barrier film, a bag, a pouch, shrink-wrap, a box, a tray, cartons, canisters, bag in box, vacuum packaged products, and the like. The packaging material may be flexible, semi-rigid, or rigid construction. It may also comprise a composite arrangement of two or more types of packaging, e.g. one inside of the other, such as a sleeve type packaging inside of a bag. Such packaging materials may be made out of paper, plastics, metal, foils, multi-layer extrusions, laminates, overlays, combinations of any of these, and the like. Suitable packaging materials encompass many commercial food packaging materials and types. Suitable packaging materials can be readily identified and confirmed via a test run(s) with respect to a particular set or sets of process conditions. The types of processed foods that may be reformed may be processed foods which contain a grain-based ingredient, for example, from low-moisture doughs. Such low-moisture doughs may include, for example, bread doughs, pizza doughs, cereal doughs, pet food doughs, cracker doughs, baked good doughs, and the like.

In one particular embodiment, the grain-based ingredient comprises farinaceous material, and granular food products containing a farinaceous material emerge from the grinding treatment substantially functionally intact and substantially without loss of flavor. In this embodiment, the grinding treatment effectively granulates processed foods containing farinaceous material without inducing significant or uncontrolled starch gelatinization or other structural degradation of starch content. That is, sufficient original starch structure in particular in these processed foods is retained intact and preserved through the treatment to yield a food product having functional and organoleptic attributes acceptable for reuse in rework.

In other embodiments, a cookie or cracker product matrix composed of flour, sugar, fat and salt contained within a plastic liner package can be ground into free flowing cookie/cracker base while being simultaneously separated from its package. The product base can be reworked into parent or non-parent dough, recovering valuable product that would otherwise be lost with the high volumes of scrap that occur from the packaging operation.

In some embodiments, the reclamation of processed food and its packaging is conducted as a grinding process in which compressed air and packaged processed food are separately introduced into an enclosure that includes a truncated conical shaped section. After introduction, the compressed air travels generally along a downward path through the enclosure until it reaches a lower end thereof. The air flows back up from the lower end of the enclosure in a central region thereof until exiting the enclosure via an exhaust duct. The packaged processed food is separately introduced into an upper end of the enclosure, and the food and packaging become entrained in the air traveling downward through the enclosure until reaching the lower end of the enclosure. In one embodiment, the compressed air is introduced into the enclosure at approximately ambient temperature, and also may be dehumidified where the ambient relatively humidity exceeds about 50% to minimize or reduce risk of clumping in the food material while being processed in the cyclone.

During this movement of the packaged processed food from the upper end of the enclosure down to the lower end thereof, the processed food and packaging are at least physically processed. The food also may be further dehydrated by use of heated compressed air in which it is suspended in a dynamic air flow system. During the same unit operation, the food is disintegrated into small particles in an extremely short duration of time while the packaging is broken down into larger particles. After introducing the packaged processed food into the process unit, the processed food and packaging are processed and discharged from the process unit in a short duration of time, which can be less than about 60 seconds, particularly less than about 30 seconds, and more particularly less than about 10 seconds. Significant amounts of the introduced processed food can be ground before reaching a lower end of the enclosure. As such, this attrition of the processed food into granular form and of the packaging material into smaller fragments may be achieved without a grinding device using moving mechanical parts.

Consequently, in these embodiments, a solid particulate product including ground food is discharged and recovered from the lower end of the enclosure, while air and any moisture vapor released from the food during processing within the unit is exhausted from the system via the exhaust duct, In one particular embodiment, the enclosure is a two-part structure including an upper cylindrical shaped enclosure in which the compressed air and packaged processed food are separately introduced, and the cylindrical enclosure adjoins and fluidly communicates with a lower enclosure having the truncated conical shape that includes the lower end of the overall structure from which the processed feed material is dispensed.

Grinding packaged processed foods in accordance with embodiments of this invention offers numerous advantages over conventional schemes for disposal of packaged processed food. For one, costs associated with transporting and disposing of a food material and packaging are reduced or eliminated. The grinding treatment makes it possible to produce a granular food product from packaged processed food that is also separated from its packaging material at a relatively low temperature, short duration procedure. The grinding treatment preferably may be achieved as a single-stage operation without impairing the desirable functional attributes of the food material, and without requiring different processes to be performed in different equipment, all while separating the packaging fragments from the processed food material. Additionally, the process can be operated in a continuous mode as the compressed air is continuously exhausted from the system after entraining the food and packaging downward through the enclosure to its lower end, and ground food product material can be withdrawn from the lower end of the enclosure as it is being separated from the packaging fragments. Relatively little if any food or packaging residue is left on the inner walls of the processing unit, making it easy to clean and facilitate switching to a different type of processed food for processing within the unit. These advantages reduce process complexity, production time, and production and service costs.

### BRIEF DESCRIPTION OF THE DRAWINGS

Other features and advantages of the invention will become apparent from the following detailed description of preferred embodiments of the invention with reference to the drawings, in which:

FIG. 1 is a flow chart of a method for processing and re-using packaged processed food according to an embodiment of this invention.

FIG. 2 is a schematic view of a system useful for processing packaged processed food according to an embodiment of this invention.

FIG. 3 is a cross sectional view of the cyclone unit used in the processing system illustrated in FIG. 2.

FIG. 4 is a schematic view of a system useful for processing packaged processed food according to another embodiment of this invention.

The features depicted in the figures are not necessarily drawn to scale. Similarly numbered elements in different figures represent similar components unless indicated otherwise.

### DETAILED DESCRIPTION OF THE PREFERRED EMBODIMENTS

Preferred embodiments of the invention will be described below with specific reference to unique processing of packaged processed foods.

When packaged processed food is processed in accordance with embodiments herein, food content is separated from packaging and ground into small particles or fragments within a short period of time in a grinding process performed in one unit operation. In general, the grinding process is implemented on a cyclonic type system that may be operated in a manner whereby the packaged processed food may be physically acted upon in a beneficial manner. A ground food product is obtained in a granulated form (e.g., a solid fine particulate), and also fragmented packaging material.

For purposes herein, "grinding" a particle means crashing, pulverizing, abrading, wearing, or rubbing the particle to break it down into smaller particles and/or liberate smaller particles, and includes mechanisms involving contact between moving particles, and/or between a moving particle and a static surface; and "drying" means dehydrating, i.e., reducing moisture content.

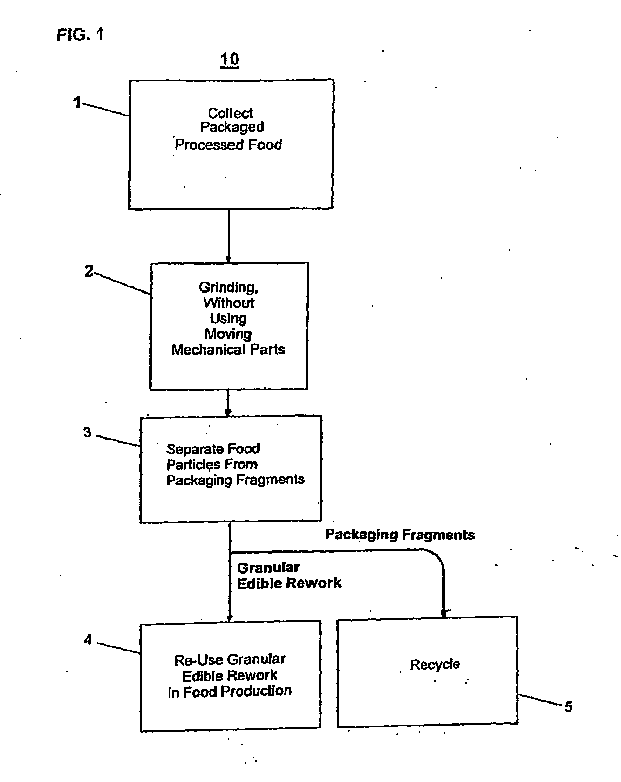

Referring to FIG. 1, in this non-limiting illustrated embodiment, a process 10 is shown in which packaged processed food is collected (step 1), then it is subjected to a grinding treatment (step 2), then the resulting granulated food particles are separated from the plastic fragments (step 3); and the granular food product faction thereof or "rework" is made available for re-use as a food ingredient (step 4), while the packaging fragments can be recycled and re-used, such as a packaging component (step 5).

A granular food product is obtained which is suitable for use in comestibles and packaging fragments are obtained from the separation process of the packaging material and the processed food which can then be recycled. For instance, the granulated food product obtained substantially retains its flavor and functional attributes through the grinding treatment. For instance, when the processed food is a farinaceous material residual starch content of the processed foods that remains after any prior cooking or other thermal treatments are performed on the processed food is substantially maintained through the grinding process according to the present invention, and thus is functionally available for re-use. The packaging fragments obtained can be separated from the granulated food product and thus are functionally available for re-use in further package re-processing.

The granular food product also may be stably stored until re-used in subsequent food production. The granulated food product may be used as a food ingredient in the same type of processed food production line from which it was made, or in a different type of processed food production line in which its flavor or functional attributes may be desirable or useful. It also may be re-used at relatively high levels in further food production lines.

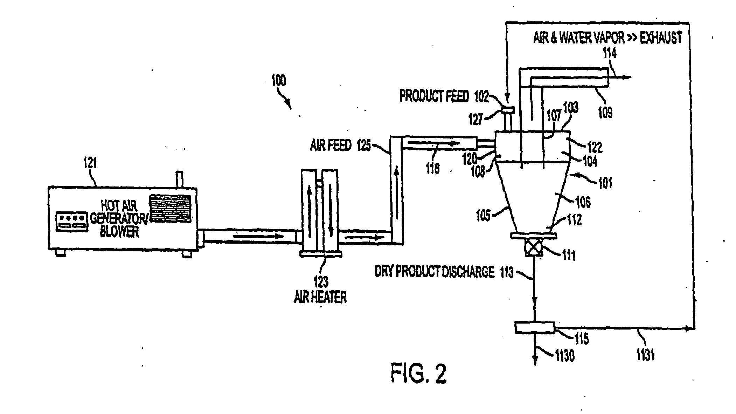

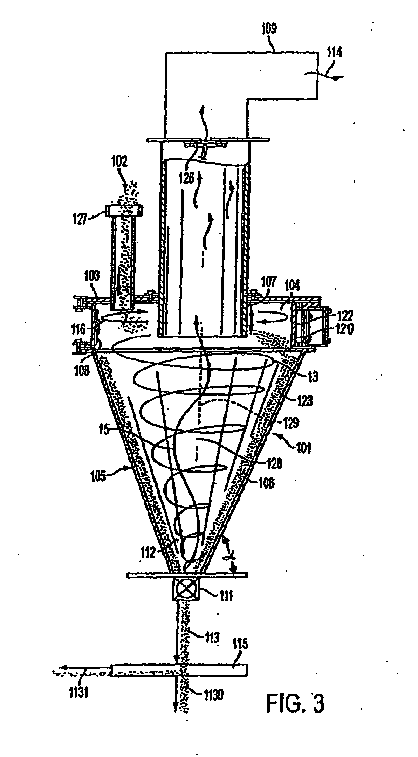

Referring now to FIGS. 2 and 3, details of an exemplary equipment arrangement and process of operating it for conducting the grinding of the packaged processed food in step 2 of FIG. 1 is discussed hereinafter. The packaged processed food that is introduced into the cyclonic system for treatment in the process of this invention may be derived from commercial food manufacture or other sources of processed food materials. The processed food may be in the form of discrete whole pieces as originally manufactured, or as portions, parts, fragments, shreds, fragments, and so forth thereof. The processed food will typically be enclosed in a packaging material upon introduction into the cyclonic system.

Referring to FIG. 2, an exemplary system **100** for performing grinding of packaged processed food according to a process embodiment of this invention is shown. Cyclone **101** is a structural enclosure comprised of two fluidly communicating sections: an upper cylindrical enclosure **103** defining a chamber **104;** and a lower truncated conical shaped enclosure **105** that defines a cavity **106.** Both the upper and lower enclosures are annular structures in which a solid wall or shell encloses an interior space. In this illustration, the upper enclosure **103** has a generally uniform cross-sectional diameter, while the lower enclosure **105** tapers inward towards its lower end **112.** In a non-limiting embodiment, the taper angle α of lower enclosure **105** may range from about 66 to about 70 degrees. For purposes herein, the terminology "enclosure" means a structure that encloses a chamber, cavity, or space from more than one side.

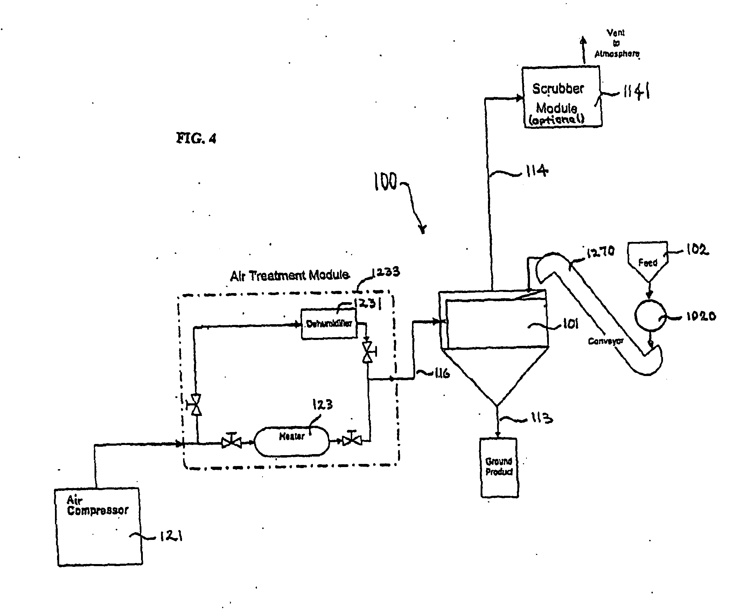

Compressed air **116** and packaged processed food **102** are separately introduced into the cyclone **101** at the upper enclosure **103.** The packaged processed food is discharged as solid particulate **113** from the lower end **112** of the cyclone **101**. A valve mechanism **111,** such as a rotary valve or rotary air-lock, may be used that permits extraction of dried, ground food product from the cyclone without interrupting continuous operation of the system and which minimizes leakage of the introduced air from the cyclone **101.** If the cyclone **101** is operated without an air-lock or the like at the bottom discharge end of the cyclone **101,** the system generally will run less efficiently as air will be forced out of the lower end **112,** which will need to be compensated for in the air feed rate. However, in a preferred embodiment the cyclone is operated without an air-lock. Air, and possibly some small amount of moisture vapor released from the food and packaging during treatment within the cyclone **101,** is exhausted as exhaust gases **114** from the cyclone via a sleeve **107** and an exhaust duct **109.** Some nominal amount of light debris may be liberated from the food during processing in the cyclone, and may be eliminated with the exhaust gas stream **114.** The exhaust gas stream **114** optionally may be particle filtered, and/or scrubbed to strip out volatile compounds or other compounds, such as using a separate scrubber module, e.g. a packed bed type scrubber, before it is vented to the atmosphere (e.g., see FIG. 4, feature **1141).** A sieving device **115** is described in more detail later herein. Generally, it is used to separate the packaging fragments (and, it present, oversize or coarser food product) **1131,** from a finer ground portion **1130** comprised of the food product introduced into the cyclone **101** in packaged form The plastic fragments and any oversize coarse food product present may be separated, e.g., such as by additional sieving (not shown). The particular mesh size(s) used in the sieving system for these purposes can vary depending on the particular combination of packaging and food materials involved.

To introduce the compressed air **116** into the cyclone **101,** an air pressurizing mechanism **121,** such as a blower or air compressor, generates a high volume, high velocity compressed air stream that is conducted via air ducting **125** through an optionally used air heater **123,** and from there is introduced into the upper enclosure **103** of the cyclone **101.** Heating the compressed air before its introduction into the cyclone **101** is not necessarily required. However, it may be used for added moisture content control or adjustment in the product, if desired. For purposes herein, the term "compressed air" refers to air compressed to a pressure above atmospheric pressure, e.g., above 14.7 psia (1b./inch² absolute (101.4kPa). The term "heated air" refers to air heated to a temperature above ambient temperature, e.g., above 75°F (24°C). The term "compressed heated air" refers to air having both these characteristics.

The compressed air **116** is introduced into the chamber **104** substantially tangentially to an inner wall **108** of the upper enclosure **103.** This can be done, for example, by directing the air stream **116** to a plurality of holes **120** (e.g., 2 to 8 holes) circumferentially spaced around and provided through the wall **108** of the upper enclosure **103** through which the air stream is introduced. Deflection plates **122** can be mounted on the inner wall **108** of the upper enclosure **103** for deflecting the incoming stream of air into a direction substantially tangential to the inner wall **108** according to an arrangement that has been described, for example, in U.S. patent application publication no. 2002/0027173 A1, which descriptions are incorporated herein by reference. The compressed air may be introduced into the upper enclosure **103** of the cyclone **101** in a counter-clockwise or a clockwise direction.

The introduced air **116** generally may be further pressurized cyclonically in the chamber **104** and the cavity **106.** Due to the centrifugal forces present in the cyclonic environment, it is thought that the pressure nearer the outer extremities of the cavity **106** is substantially greater than atmospheric pressure, while the pressure nearer the central axis of the cavity **106** is less than atmospheric pressure. As shown in FIG. 3, as a non-limiting illustration, after being introduced into the upper enclosure **103,** the compressed air **116** spirals or otherwise travels generally along a large downward path as a vortex 13 through the upper enclosure **103** and the lower conical shaped enclosure **105** until it reaches a lower end **112** thereof. In this illustration, near the lower end **112** of the cavity **106** defined by the inner walls **123** of the lower enclosure **105,** the downward direction of the air movement is reversed, and the air (and any moisture vapor released from the food during treatment within the cyclone **101**) whirls back upwardly as a smaller vortex **15** generally inside the larger vortex **13.** The smaller vortex **15** flows back up from the lower end **112** of the lower enclosure **105** in a central region **128** located proximately near the central axis **129** of the cyclone **101** and generally inside the larger vortex **13.** The smaller vortex **15** flows upward until exiting the enclosure via the sleeve **107** and then the exhaust duct **109.**

A vortex breaking means (not shown) optionally can be interposed below or inside the lower end **112** to encourage the transition of the larger vortex **13** to the smaller vortex **15.** Various vortex breaking arrangements for cyclones are known, such as the introduction of a box-shaped enclosure at the bottom of the conical enclosure.

The packaged processed food **102** is separately introduced into the upper enclosure **103.** The introduced packaged processed food drops gravitationally downward into the chamber **104** until entrained in the air vortex **13** within the cyclone **101.** Preferably, the packaged processed food is introduced into the upper enclosure **103** in an orientation such that it will fall into the cyclonic vortex **13** generated within the cyclone **101,** where it is located in the space between the sleeve **107,** and inner wall **108** of the upper enclosure **103.** This feed technique serves to minimize the amount of packaged processed food that may initially fall into extreme inner or outer radial portions of the vortex where the cyclonic forces that the food and packaging experience may be lower.

The entrained food and packaging travel in the vortex **13** of air spiraling or otherwise traveling downward through the lower enclosure **105** until reaching the lower end **112** of the lower enclosure **105.** During this downward flow path, the grinding effects on the food and separation of the packaging may occur at different respective times and at different places during the downward flow path of the food and packaging through the cyclone. When the packaging is introduced into the cyclone **101** it typically contains a processed food product in its interior cavity. Alternately, the packaging material may yet contain another packaging material inside of its interior cavity, which in turn contains the processed food. Once the packaged food product is introduced into the cyclone **101** the air pressure differential between the cyclone **101** and the interior of the packaged food is such that it causes the packaging to implode at the package seams, seals and weakened points of the packaging and to separate into fragments. The resulting released food contents and packaging fragments are further acted upon by disintegrating forces generated and present within the cyclone. While not desiring to be bound to any theory, it is thought that possible pressure-gradient and coriolis forces across, cavitation explosions, and the collision interaction between the food particles entrained in the high-velocity cyclonically pressurized air may be violently disruptive to the physical structure of that material, acting similarly upon the packaging materials. Alternatively, or in addition thereto, the centrifugal force of the vortex may move the food forcefully against the inner walls **108** and **123** of the enclosure. These modes of attrition, individually or in combination, or other modes of attrition that may occur within the cyclone which may not be fully understood, bring about comminuting (grinding) of the food concurrent and separation of the packaging material. As a result, during this movement of the food and packaging from the upper enclosure **103** down to the lower end **112** of the lower enclosure **105,** the processed food is physically processed in beneficial ways the packaging is separated or divided into numerous fragments, The unit **101** reclnires no mechanical moving parts for effecting grinding of the processed food for separation of the packaging materials,

The discharged stream **113** contains granulated food and packaging (e.g., plastic, paper, or metalized foil packaging, etc.) fragments. Preferably, these two product fractions are separated from one another. In a particular embodiment, the discharged product stream **113** is screened, such as using a sieve, such as a screen sieve or other suitable particulate separation/classifying mechanism **115**, to sort and separate the finer fraction of ground food **1130** in the solid particulate product **113** that have particle sizes meeting a size criterion, such as being less than a predetermined size, which are suitable for post-grinding processing, from the packaging fragments (and, if present, any coarser product fraction) **1131.** Although not shown, additional separation/classifying treatments can be conducted on stream **1131** to separate any coarser (oversize) food product fraction from the packaging fragments in stream **1131.** Coarser (oversize) food fraction, once separated from the packaging fragments, optionally may be redirected into the upper enclosure of the cyclone for additional processing therein. A conveyor (not shown) could be used to mechanically transport the coarser material back to the feed introducing means **127** or other introduction means in the upper enclosure **103** of the cyclone **101.** Also, the feed introducing means **127** may be an inclined conveyor (e.g., see FIG. 4, feature **1270**), which transports dual density feed material from a lower location up to and into the chamber **104** of the cyclone **101** at the upper enclosure **103.** A package with textural materials different from the product inside will be separated from the product when the configuration of the packaging material does not allow for tearing at the same rate that the internal food material is ground. As indicated, the packaging fragments are separated from the finer fraction of ground food **1130** through use of the sieve or screen at the lower end **112** of the lower enclosure **105.** The ground food product is used for re-use in food processing while the packaging fragments are recycled for later use in processing packaging materials.

It will be appreciated that the sleeve **107** can be controllably moved up and down to different vertical positions within the cyclone **101.** In general, the lower the sleeve **107** is spaced relative to the cavity **106,** the smaller the combined total volume of the cyclone **101** which is available for air circulation. Since the volume of air being introduced remains constant, this reduction in volume causes a faster flow of air, causing greater cyclonic effect throughout the cavity **106** and consequently the introduced food to be ground and packaging to be separated and to circulate longer in the chamber **104** and the cavity **106.** Raising the sleeve **107** has the opposite effect. For a given feed and operating conditions, the vertical position of the sleeve **107** can be adjusted to improve process efficiency and yield.

Also, a damper **126** can be provided on the exhaust duct **109** to control the volume of air permitted to escape from the central, low-pressure region of the cavity **106** into the ambient atmosphere, which can affect the cyclonic velocities and force gradients within the cyclone **101.** Other than the optional damper, the unit **101** generally requires no moving parts for operation, and particularly with respect to effecting the grinding action which occurs within the unit.

By continually feeding packaged processed food into the cyclone **101,** a continuous throughout of ground food product material and separated packaging fragments **113** are obtained. A non-limiting example of a commercial apparatus that can be operated in a continuous manner while processing food and packaging according to processes of this invention is a WINDHEXE apparatus, manufactured by Vortex Dehydration Systems, LLC, Hanover Maryland, U.S.A. Descriptions of that type of apparatus are set forth in U.S. patent application publication no. 200210027173 A1, which descriptions are incorporated in their entirety herein by reference.

The cyclonic system **100** can provide very high heat transfer rates from hot air to processed food for any further drying or moisture control that may be optionally desired, and mechanical energy to crack and granulate food as it descends through the conical section of the dryer. The food exiting the cyclone **101** exhibits a flowable solid particulate type form, which may be a flour or powder like material. On the other hand, the packaging material that is introduced together with the processed food is broken down into multiple pieces of packaging fragments and upon exiting the cyclone **101** the packaging fragments are larger in particle size than the ground food product and hence are able to be separated from the finer granulated food particles.

The processing unit **101** may be left relatively clean and tidy, as processed material does not tend to cling as residue to the interior walls of the process unit used to grind the food into granular form. This can facilitate any desired change-over for processing a different type of feed material within the same unit.

In one process scheme for processing packaged processed food, the introduction of the compressed air into the cyclone comprises supplying compressed air at an inlet pressure within the range of from about 10 psig (Ib./inch² gauge) (0.07MPa) to about 100 psig (0.69MPa) particularly from about 20 psig (0. 14MPa) to about 60 psig (0.41MPa) and more particularly from about 20 psig (0. 14MPa) to about 40 psig (0.28MPa). For example, for the separation of paper packaging, compressed air pressure may be at about 20 psig (0. 14MPa), and for foil packaging, the compressed air pressure may be at about 40 psig (0.28MPa).

As noted, heating of the compressed air before its introduction into the processing unit is not ordinarily required for processing the packaged processed food according to embodiments herein. If heated compressed air is used, heated air may be introduced into the cyclone at an appropriate temperature for the food and purpose intended. Generally, the temperature of the compressed air introduced into the cyclonic processing chamber will be from about 0°F (-18°C) to about 500°F (260°C), particularly about 32°F (0°C) to about 120°F (49°C), and more particularly about 40°F (4°C) to about 100°F (38°C). As the feed material is of a dry to low-moisture content, the need for heated air is reduced or eliminated in most instances.

**The volumetric introduction rate of the compressed air into the cyclone is** within the range of from about 500 cubic feet per minute (CFM) (0.236m³/s) to about 10,000 CFM (4.72m³/s), particularly from about 800 CFM (0.38m³/s) to about 10,000 CFM (4.72m³/s), and more particularly from about 1,000 CFM (0.47m³/s) to about 3,000 CFM (1.42m³/s).

**The feed rate of the packaged processed food can vary, but generally may be in** the range of about I to about 300 pounds per minute (about 7.6 to about 2268g/s), particularly about 50 to about 150 lbs./min (about 0.4 to about 1.2kg/s), for about a 1 to about a 10 foot (about a 305 to about 3050mm) diameter (maximum) cyclone. The cyclone diameter may be, for example, about 1 to about 10 feet (about 305mm to about 3050mm) in diameter, particularly about 1 to about 6 feet (about 305mm to about 1829mm) in diameter.

The packaged processed food may be processed within the above-noted cyclone arrangement within a very short period of time. In one embodiment, upon introducing the packaged processed food into the cyclone, a granulated product thereof and separated packaging are discharged from the processing unit within about 15 seconds, and particularly within about 1 to about 5 seconds.

Substantially all the introduced packaged processed food may be discharged as processed product within such a short period of time. The above-noted processing temperatures and durations applied during grinding of the packaged processed food generally are low enough to help prevent any significant undesired changes in the starch structure, or other physico-chemical attributes relevant to food-processing, from occurring during the grinding treatment such as described herein. Any starch content present in the food (before granulation) is preserved substantially intact through the grinding treatment performed in accordance with this invention on the processed food. Conventional milling generally employs moving parts to effect attrition of a material, which tends to generate localized heat. Intense or unduly elevated heat may increase the risk of degradation of desirable food functional features.

In one embodiment, the packaged processed food used as the feed material of a grinding process generally contains less than 14 wt.% moisture, and particularly less than 12 wt.% moisture, and generally ranges from 1 wt% to 14 wt% moisture, and particularly from 6 wt% to 12 wt%, when introduced into the cyclone **101** of the system **100.** Feed material at higher moisture levels may also be used to the extent it does not agglomerate or build-up into a sticky or pasty mass inside the cyclone or otherwise become non-processable. The compressed air fed into the cyclone ordinarily is unheated, although a heated condition may be used. In one embodiment, the food material is processed at ambient (nonheated) temperature, such as at a temperature of about 65 to about 80°F (about 18 to about 27°C). It may be necessary to dehumidify the compressed air before it is introduced into the cyclone unit in high relative humidity (RH) conditions (e.g. RH greater than about 50%) to ensure that the feed material can be attrited into granular form and does not build-up into a sticky or pasty mass inside the cyclone. The air may be dehumidihed using a conventional cooling coil unit or similar device used for dehumidification of process air (e.g., see FIG. 4, feature 1231). The dehumidifier or air dryer **1231** may be a commercial unit for the general purpose, e.g., a Model MDX 1000 air dryer from Motivair, Amherst, NJ.

Under certain conditions, the compressed air fed into the cyclone may be heated in an air heater **123** to induce some further dehydration of the feed material while it is being ground in the same process unit (see Fig. 4). The dehumidifier **1231** and heater **123** are units of the subsystem represented as the air treatment module **1233** in FTG. 4. As indicated in FIG. 4, control valves and the like may be used to selectively control and manage air flow through the various air treatment units in the module **1233.** The ground (granulated) food product obtained from the process also generally may contain about I wt.% to about 14 wt% moisture, or otherwise the same or lower level of moisture as the feed material to the extent no additional moisture is introduced during processing in the cyclone.

Ground food product obtained by a grinding process preferably has commercially useful particle sizes. In one embodiment, the dried, ground food product obtained by processing packaged processed food according to an embodiment of this invention generally may have an average particle size of about 1 micron to about 1,000 microns, particularly about 2 to about 1,000 microns. In one embodiment, the solid particulate edible product fraction obtained as the bottoms of the cyclone comprise at least about 50% ground food product having an average particle size of about 1 micron to about 1,000 microns. Tray type material is relatively brittle, so the end particle size generally ranges from about I 1 mm to about 90 mm and higher. Paper bag type material is not as brittle and so does not typically brake up quite as easily, and therefore the resulting end products from that type of packaging are generally from about 10 mm to about 100 mm in size.

The packaging material type is not particularly limited other than it should be a material susceptible to disintegration or other structural break-down under processing conditions of an embodiment of this invention sufficient to release its food contents. For instance, the packaging material may be a sleeve type packaging or barrier film, a bag, a pouch, shrink-wrap, a box, a tray, cartons, canisters, bag in box, vacuum packaged products, and the like. The packaging material may be flexible, semi-rigid, or rigid. It may also comprise a composite arrangement of two or more types of packaging, e.g. one inside of the other, such as a sleeve type packaging inside of a bag. Such packaging materials may be constructed of or include paper, plastic, metal, foil, multi-layer extrusion, laminate, overlay, combinations of any of these, and the like. Suitable packaging materials encompass many standard or commercial food packaging materials and types. Suitable packaging materials can be readily identified and confirmed via a test run(s) with respect to a particular set or sets of process conditions on the system such as illustrated herein. The packaging fragments obtained in accordance with the embodiments of this invention may be recyclable, depending on the packaging material, and if so may be re-used in the manufacture of a variety of packaging materials. For instance, synthetic plastic and paper packaging materials can be recovered in fragmented form as a product fraction of the inventive process, and then may be-reused in recycled plastic or paper production. Non-limiting examples of suitable packaging materials which can be processed as described herein include, e.g., paperboard, single and multi-layer extrusion plastic films, metal foils, multimedia/multicomponent packaging, parchment paper, blown films, and the like

The granular food product obtained in accordance with embodiments of this invention is edible and may be used in a wide variety of foodstuffs for a variety of purposes. The granulated food product preferably does not have an unpleasant taste or odor, and may be easily processed with doughs, processed meats, and other processed foods without loss of quality. For example, the granulated food product of embodiments of this invention serves as an economical replacement for original ingredients used in such food products. The granulated food product has ability to contribute flavor and function without adversely impacting such food products. The granulated food product obtained generally is shelf stable, and may be used to impart flavor and/or functional properties to a food product being manufactured after many months of storage of the granulated food product, such as up to about twelve months storage/shelf life or more.

In some preferred embodiments, the foods processed according to an embodiment of this invention comprise packaged processed foods containing a grain-based ingredient. The grain-based ingredient may include one or more principal parts of cereal grain, such as the pericarp or bran (external layer of grain), the endosperm (farinaceous albumen containing starch), or the germ (seed embryo). Examples are cereal grains, meals, flours, starches, or glutens, obtained from grinding cereal grains, such as wheat, com, oats, barley, rice, rye, sorghum, milo, rape seed, triticali, legumes, soy beans, peanuts, beans, and mixtures thereof, as well as various milling products of such cereal grains, such as bran. In one embodiment, the processed food generally may contain, on a dry basis, about 1 to about 99 wt.%, and particularly about 5 to about 95 wt% grain-based ingredient, and the remainder may be comprised of one or more of meat(s), non-grain based agricultural food materials, and/or food additives.

In one embodiment, the grain-based ingredient comprises a farinaceous material, and particularly a farinaceous material obtained or derived from cereal grain(s). Farinaceous materials include the above-noted cereal grains, meals or flours, as well as tuberous foodstuffs, such as tapioca, dried potatoes, and flours thereof, and also dried onions, dried garlic, or the like. These starch-containing materials can be processed according to this invention without incurring undue gelatinization or other undesirable changes. That is, starch content of the processed food is retained substantially intact through granulation processing according to embodiments herein from a structural and functional standpoint. The grinding unit such described herein permits relatively short duration, low temperature processing to be used to yield a granular product, which is thought to help inhibit and avoid starch transformations (e.g., gelatinization) in starch content of processed food during processing.

The packaged processed foods containing a grain-based ingredient may be selected, for example, from low-moisture dough-based materials. In one embodiment, these low-moisture dough-based materials are derived from substantially or fully cooked processed food products. Such low-moisture dough-based materials may be, for example, cereals, pet foods, crackers, baked goods, breads, snack chips, cookies, and so forth. The low-moisture materials thereof may be collected as part of food manufacture processing performed on finished food products.

Crackers generally may include ingredients commonly used in commercial manufacture of such products. These dough recipes may comprise bread flour, water, yeast, salt, and oil or shortening, and optional other ingredients such as gluten, alpha amylase enzyme, dough relaxers, mold inhibitors, egg ingredients, sweeteners, flavoring agents and so forth, in useful proportions. The pizza dough recipe may include those described in expired U.S. Pat. No. 4,303,677, and commonly assigned published U.S. Pat. Appln. No. US 2002/0197360 A1, which descriptions are incorporated herein by reference.

The granulated product obtained from dough-based materials in this manner may be used as a replacement for fresh dough ingredients in a food production line at substantially unrestricted levels. The granulated product obtained from dough may be used at levels of 0.1 wt% or more, and more particularly about 1 to about 99 wt%, in place of fresh flour in a dough batch.

In another embodiment, breakfast cereal production materials containing a grain-based ingredient may be ground in a procedure yielding a stable granular material that can be re-used in cereal product production. One source of breakfast cereal production materials includes non-particulated extruded rope materials comprising the cereal-making ingredients. Breakfast cereal products include those made as grain-based extruded products. These products generally are manufactured by feeding an at least partly ungelatinized, moistened grain-based material and other cereal ingredients to an extruder having at least one rotating screw. The grain-based material is worked by rotating the screw to impart mechanical energy to mix the grain-based material and other ingredients of the breakfast cereal to form a plasticized doughy mass which is forced through at least one die orifice in a die plate to obtain an extrudate rope. Individual pieces of cereal are then formed from the extrudate rope, such as by intermittent severing of the rope using a reciprocating die. The pieces of cereal are then dried to provide a generally flowable mass of low moisture cereal particles, prior to packaging.

The grain-based feed material that may be used for cereal making includes those already noted, which may comprise wheat, corn, barley, oats, rice, rye, sorghum, and mixtures thereof. If desired, the feed material may include supplemental materials to improve flavor, texture, appearance, nutrition, or other properties of the finished cereal product, including materials commonly used for these various purposes in cereals. Such supplemental materials may include, for example, one or more of sweeteners (e.g., sugars, syrups, honey), salt, minerals (e.g., calcium), vitamins (e.g., folates), flavorings (chocolate, vanilla, cinnamon, fruit flavor), fiber source (e.g., cellulose, pectin, psyllium), in suitable amounts.

Examples of types of cereal products that may be reformed in accordance with this invention, include, for example, Post® Alpha-Bits®, Post® Honeycomb®, Post® Fruity Pebbles®, Post® Bran flakes, and Post® Shredded Wheat cereals, and the like.

In yet another embodiment, pet food materials containing a grain-based ingredient may be ground in a procedure yielding a stable granular material that can be re-used in pet food production. Dog and cat foods, for example, are generally prepared as either meal-type or canned-type rations. Such foods are generally formulated from a combination of proteinaceous and farinaceous materials. The proteinaceous material is derived from meat and/or meat sources, and/or vegetable protein sources. The farinaceous material is derived from grain products and contains starch generally but not necessarily for all cases as a major component. Foods of these types of pet food production may be collected for re-use according to this invention.

The pet food production from which granular products also may be obtained and re-used includes so-called chewy dog snacks, such as those containing cereal-starch materials as textural agents or for other purposes. Examples of such chewy dog snacks include Nabisco® Milk-Bone® brand pet snacks. They also include pet snacks such as those described in U.S. Pat. No. 4,997,671 (Nabisco), which descriptions are incorporated herein by reference.

Pet food production having a moisture content of generally less than 14 wt.%, and particularly less than 12 wt.%, may be reformed into a granular product suitable for use in pet food production using the grinding process of the present invention. Dog food according to an embodiment of this invention may have particles size ranging from about 2 to about 50 microns.

The Examples that follow are intended to illustrate, and not limit, the invention. All percentages are by weight, unless indicated otherwise.

### EXAMPLES

**Example 1**

Packaged Nabisco® Premium Saltine® crackers were fed into a WINDHEXE apparatus for circular vortex air-flow material grinding and to simultaneously separate the package efficiently and economically. The crackers were packaged in a cylinder shaped barrier film or bag-liner manufactured by Pliant Corporation, Schaumburg, IL, U.S.A. (Pliant Unipeel 353EW, 1.6 mil HDPE/WHDP/EVA), The WINDHEXE apparatus was manufactured by Vortex Dehydration Systems, LLC, Hanover, Maryland, U.S.A. The basic configuration of that type of apparatus is described in U.S. patent application publication no. 200210027173 A1, and reference is made thereto. The process unit had four inlet ports equidistantly spaced around the upper portion of the apparatus through which the compressed air stream was concurrently introduced in a counter-clockwise direction.

A three-foot diameter (0.9m) WINDHEXE apparatus was tested. The diameter size refers to the chamber size of the enclosure into which air and packaged processed food introductions were made. The conditions of this experiment are described below. The feed rate of the packaged crackers was set for an approximate discharge of 3 pounds solid product per minute (22.7g/s). The packaged processed food was loaded into a hopper that directly fed onto a three-inch belt conveyor that fed into the WINDHEXE apparatus. Testing was performed in the three-foot diameter (0.9m) WINDHEXE apparatus with compressed air introduced at 70°F (21°C), an air introduction rate of 1,000 cubic feet per minute (cfm) (0.5m³/s) and pressure of 32 psig (0.2MPa). The rotary air-lock valve was physically removed during operation of the WINDHEXE apparatus. The air introduction line was equipped with a dehumidifier, which was set-controlled to be automatically activated when relative humidity levels in the ambient air exceeded 50%, and was operable to maintain levels below that value. The air compressor feeding air to the cyclone apparatus was activated for approximately 5 seconds.

A food product exiting the apparatus was in finely ground form and packaging material was in large distinct fragments which were intact. This granulated food product and packaging material fragments were discharged from the bottom of the cyclone in about two seconds after the packaged processed food had been introduced into the processing unit. An additional sieve (14 mesh) is needed to further separate packaging fragment remains from the granulated food product, which is located at the discharge end of the cyclone. The dry granulated food product obtained had an average particle size of about 5 to about 50 microns. It was shelf stable, had a well-retained flavor through the grinding treatment, and it was functionally suitable for muse as a cracker ingredient in a similar cracker product line from which it was originally used. It will be appreciated that it may be useful in different food product lines. The packaging material fragments obtained had a minimum particle size of 10 mm and larger and were functionally suitable to be recycled. Additional studies have shown that feed rate and air temperature variation may be used to control the food product granulation and moisture content, as well as the packaging separation.

**Example 2**

Packaged Chips Ahoyl® cookies were fed into a WINDHEXE apparatus for circular vortex air-flow material grinding and to simultaneously separate the package efficiently and economically. The cookies were packaged in a cylinder shaped barrier film or bag-liner manufactured by Pliant Corporation, Schaumburg, IL, U.S.A. (Pliant X3:060, 1.8 mil, HDFE/WHDPE/Surlyn). The WINDHEXE apparatus was manufactured by Vortex Dehydration Systems, LLC, Hanover, Maryland, U.S.A. The basic configuration of that type of apparatus is described in U.S. patent application publication no. 2002/0027173 A1, and reference is made thereto. The process unit had four inlet ports equidistantly spaced around the upper portion of the apparatus through which the compressed air stream was concurrently introduced in a counter-clockwise direction.

A three-foot diameter(0.9m) WINDHEXE apparatus was tested. The diameter size refers to the chamber size of the enclosure into which air and packaged processed food introductions were made. The conditions of this experiment are described below. The feed rate of the packaged cookies was set for an approximate discharge of 3 pounds solid product per minute (22.7g/s). The packaged processed food was fed into the WINDHEXE apparatus. Testing was performed in the three-foot diameter (0.9m) WINDHEXE apparatus with compressed air introduced at 70°F (21 °C), an air introduction rate of 1,000 cubic feet per minute (cfm) (0.5m³/s) and pressure of 40 psig (0.28MPa). The rotary air-lock valve was physically removed during _{'} operation of the WINDHEXE apparatus, The air introductions line was equipped with a dehumidifier, which was set controlled to be automatically activated when relative humidity levels in the ambient air exceeded 50%, and was operable to maintain levels below that value. The air compressor feeding air to the cyclone apparatus was activated for 5, 10 and 15 seconds. In this particular example, 5 seconds was not enough to achieve package separation and 15 seconds worked but slightly over-pulverized the packaging.
Ten seconds was optimal for complete package separation and product grind.

A food product exiting the apparatus was in finely ground form and packaging material was in large distinct fragments which were intact. This granulated food product and packaging material fragments were discharged from the bottom of the cyclone in about two seconds after the packaged processed food had been introduced into the processing unit. An additional sieve (14 mesh) was used to further separate packaging fragment remains from the granulated food product, which is located at the discharge end of the cyclone. The dry granulated food product obtained had an average particle size of about 5 to about 50 microns. It was shelf stable, had a well-retained flavor through the grinding treatment, and it was functionally suitable for re-use as a cookie ingredient in a similar cookie product line from which it was originally used. It will be appreciated that it may be useful in different food product lines. The packaging material fragments obtained had a minimum particle size of 10 mm or larger, and were functionally suitable to be recycled. Additional studies have shown that feed rate and air temperature variation may be used to control the food product granulation and moisture content, as well as the packaging separation.

**Example 3**

Packaged Chips Ahoyl® cookies, in both an interior bag or barrier film and an outer overwrap package, were fed into a WINDHEXE apparatus for circular vortex air-flow material grinding and to simultaneously separate the packages efficiently and economically. The cookies were first packaged in a cylinder shaped barrier film or bag-liner manufactured by Pliant Corporation, Schaumburg, IL, U.S.A. (Pliant X3:060, 1.8 mil, HDPE/WHDPE/Surlyn) and then in an overwrap blue package manufactured by Printpack Incorporated, Atlanta, Georgia, U.S.A. (Printpack 48ga PET/14#TG-WOPE/70ga Met OPP). The remaining conditions of the experiment are identical to that of Example 2. Similar results to that discussed above for Example 2 were obtained, with both the outer overwrap packaging and the inner barrier film bag liner being separated from the cookies and, discharged as large distinct fragments that were intact and separable from the granulated food product using a sieve at the discharge end of the cyclone.

While the invention has been particularly described with specific reference to particular process and product embodiments, it will be appreciated that various alterations, modifications and adaptations may be based on the present disclose and are intended to be within the scope of the present invention as defined by the following claims.

## Claims

1. A separation process for packaged processed food (102), comprising:
introducing compressed air (116) into an enclosure that includes a truncated conical shaped section (105), wherein the introduced air travels along a downward path through the enclosure including the conical section (105), to a lower end thereof (112), and the air reaching the lower end (112) flows back up and exits the enclosure via an exhaust outlet (109);
introducing into the enclosure packaged processed food (102) comprising a package containing food, wherein the packaged processed food (102) is entrained in the air (116) traveling downward through the enclosure, and wherein at least a portion of the food is liberated from the associated package and at least a portion of the processed food and packaging material are simultaneously ground before reaching the lower end (112) of the enclosure;
discharging a granular product including ground food product (1130) and packaging material fragments (1131) from the lower end (112) of the enclosure, wherein the ground food product (1130) and the packaging material fragments (1131) are separated one from the other;
the ground food product (1130) incurs sufficiently limited molecular structural degradation during the process such that the product is functionally and organoleptically acceptable to be used as rework.

2. The process of Claim 1, wherein at least a portion of the discharged packaging material fragments (1131) is recyclable.

3. The process of Claim 1 or 2, wherein the packaging material is selected from the group consisting of a barrier film, a box, a bag, pouch, shrink wrap, tray, and any combination thereof suitable for the separation process.

4. The process of any one of Claims 1 to 3, wherein the packaging material is selected from the group consisting of plastic, paper, metal film, foil, multi-layer extrusion, laminate, overlay, and combinations thereof.

5. The process of any one of Claims 1 to 4, wherein the processed food (102) is selected from the group consisting of cookies, crackers, cereals, pet foods, desserts, confectionaries, and a mixture thereof.

6. The process of any one of Claims 1 to 5, wherein the granular product has an average particle size of about 1 micron to about 1,000 microns.

7. The process of any one of Claims 1 to 6, wherein the granular product comprises at least about 50% ground food product having an average particle size of about 1 micron to about 1,000 microns.

8. The process of any one of Claims 1 to 7, wherein the granular product comprises packaging material fragments having an average particle size of about 10mm to about 30mm.

9. The process of any one of Claims 1 to 8, wherein the processed food comprises farinaceous material.

10. The process of any one of Claims 1 to 9, wherein the ground food product (1130) and the packaging material fragments (1131) are physically separated from one another by use of a sieve (115) at the discharge end of the apparatus.

11. The process of any one of Claims I to 10, wherein the introducing of compressed air (116) comprises supplying compressed air (116) at a pressure within the range of from about 10 psig to about 100 psig (about 0.07MPa to about 0.7MPa).

12. The process of any one of Claims 1 to 11, wherein the introducing of compressed air (116) comprises supplying compressed air (116) at a pressure within the range of from about 20 psig to about 40 psig (about 0.14MPa to about 0.28MPa).

13. The process of any one of Claims 1 to 12, wherein the introducing of the compressed air (116) comprises supplying the compressed air (116) at a temperature within the range of about 0°F to about 500°F (about -18°C to about 260°C).

14. The process of any one of Claims 1 to 13, wherein the introducing of the compressed air (116) comprises supplying the compressed air (116) at a temperature within the range of about 40°F (4.4°C) to about 100°F (37.8°C).

15. The process of any one of Claims 1 to 14, wherein the introducing of the compressed air (116) comprises supplying the compressed air (116) at a rate of within the range of from about 500 cubic feet per minute to about 10,000 cubic feet per minute (about 0.24m³/s to about 4.72m³/s).

16. The process of any one of Claims 1 to 15, wherein the introducing of the compressed air (116) comprises supplying the compressed air (116) at a rate within the range of from about 1,000 cubic feet per minute to about 3,000 cubic feet per minute (about 0.48m³/s to about 1.42m³/s).

17. The process of any one of Claims 1 to 16, wherein the introducing of the compressed air (116) into the upper cylindrical enclosure (103) occurs in a direction oriented generally tangentially to inner walls (103) of the cylindrical enclosure.

18. The process of any one of Claims I to 17, wherein the upper cylindrical enclosure (103) has substantially constant diameter of about 1 to about 10 feet (about 0.3m to about 3m), and the lower enclosure (103) comprises a truncated conical shape having a maximum diameter size where the lower enclosure adjoins the cylindrical enclosure (103) and the maximum diameter of the lower enclosure (105) is substantially the same as the diameter of the cylindrical enclosure (103).

19. The process of Claim 1, wherein the process further includes combining at least a portion of the granular product, including the ground food product, and at least one different processed food ingredient; and
preparing a processed food product therewith.

## Patentansprüche

1. Trennungsverfahren für verpackte verarbeitete Lebensmittel (102), bei dem man
komprimierte Luft (116) in ein Behältnis einführt, das einen kegelstumpfförmigen Abschnitt (105) hat, wobei sich die eingeführte Luft auf einer Abwärtsbahn durch das Behältnis einschließlich des kegelförmigen Abschnitts (105) zu dessen unterem Ende (112) bewegt und die das untere Ende (112) erreichende Luft zurück nach oben strömt und durch eine Ausströmöffnung (109) aus dem Behältnis austritt,
in das Behältnis verpacktes verarbeitetes Lebensmittel (102) einführt, das eine Lebensmittel enthaltende Verpackung aufweist, wobei das verpackte verarbeitete Lebensmittel (102) in der sich durch das Behältnis abwärts bewegenden Luft: (116) mitgenommen wird und wenigstens ein Teil des Lebensmittels aus der zugehörigen Verpackung freigesetzt; wird und wenigstens ein Teil des verarbeiteten Lebensmittels und des Verpackungmaterials vor Erreichen des unteren Endes (112) des Behältnisses gleichzeit zerkleinert wird, und
ein körniges Produkt mit zerkleinertem Lebensmittelprodukt (1130) und Verpackungsmaterialteilen (1131) von dem unteren Ende (112) des Behältnisses austrägt, wobei das zerkleinerte Lebensmittelprodukt (1130) und die Verpackungsmaterialtezle (1131) voneinander getrennt werden, und
das zerkleinerte Lebensmittelprodukt (1130) während des Verfahren einen ausreichend begrenzten molekularen strukturelle Anbau erfährt, so daß das Produkt zur Wiederaufbereitung funktionell und organoleptisch akzeptabel ist.

2. Verfahren des Anspruchs 1, bei dem wenigstens ein Teil der ausgetragenden Verpackungsmaterialteile (1131) wiederverwertbar ist.

3. Verfahren anspruchs 1 oder 2, bei dem Verpackungsmaterial aus der Gruppe ausgewählt wird, die einer Sperrfolie, einem Karton, einem Beutel, einer Tasche, einer Schrumpffolie, einer Schale und eine Kombination daraus besteht, die für das Trennungsverfahren geeignet sind.

4. Verfahren eines der Ansprüche 1, bis 3, bei dem das Verpackungsmaterial aus der Gruppe ausgewählt wird, die aus Kunststoff, Papier, Metallfolie, Folie, Mehrschichtextrusion, Laminat, Überzug und ihren Kombinationen besteht.

5. Verfahren eines der Ansprüche 1 bis 4, bei dem das verarbeitete Lebensmittel (102) aus der Gruppe ausgewählt wird, die aus Gebäck, Keksen, Cerealien, Haustierfutter, Nachspeisen, Konfekt und einem Gemisch daraus besteht.

6. Verfahren eines der Ansprüche 1 bis 5, bei dem das körnige Produkt eine mittlere Teilchengröße von etwa 1 Mikron bis etwa 1000 Mikron hat.

7. Verfahren eines der Ansprüche 1 bis 6, bei dem das körnige Produkt wenigstens etwa 50 % zerkleinertes Lebensmittelprodukt mit einer mittleren Teilchengröße von etwa 1 Mikron bis etwa 1000 Mikron aufweist.

8. Verfahren eines der Ansprüche 1 bis 7, bei dem das körnige Produkt Verpackungsmaterialteile mit einer mittleren Teilchengröße von etwa 10 mm bis etwa 30 mm aufweist.

9. Verfahren eines der Ansprüche 1 bis 8, bei dem das verarbeitete Lebensmittel mehlhaltiges Material umfaßt.

10. Verfahren eines der Ansprüche 1 bis 9, bei dem das zerkleinerte Lebensmittelprodukt 11 und die Verpackungsmaterialteile (1131) an dem Austragsende der Unter Benutzung eines Siebes (115) physikalisch voneinander getrennt werden.

11. Verfahren eines der Ansprüche bis 10, bei dem die Einführung der komprimierten Luft (116) die Zuführung komprimierter Luft (116) mit einem Druck in dem Bereich von etwa 10 psig bis etwa 100 psig (etwa 0,07 MPa bis etwa 0,7 MPa) umfaßt.

12. Verfahren eines der Ansprüche 1 bits 11, bei dem die Einführung komprimierter Luft (116) die Zuführung komprimierter Luft (116) mit einem Druck in dem Bereich von etwa 20 psig bis etwa 40 psig (etwa 0,14 MPa bis etwa 0,28 MPa) umfaßt.

13. Verfahren eines der Ansprüche 1 bis 12, bei dem die Einführung der komprimierten Luft (116) die Zuführung komprimierter Luft (116) mit einer Temperatur in dem Bereich von etwa 0 °F bis etwa 500 °F (etwa -18 bits etwa 260 °C) umfaßt.

14. Verfahren eines der Ansprüche 1 bis 13, bei dem die Einführung der komprimierten Luft (116) die Zuführung komprimierter Luft (116) mit einer Temperatur in dem Bereich von etwa 40 °F (4,4 °C) bis etwa 100 °F (37,8 °C) umfaßt.

15. Verfahren eines der Ansprüche 1 bis 14, bei dem die Einführung der komprimierten Luft (116) die Zuführung der komprimierten Luft (116) mit einer Geschwindigkeit in dem Bereich von etwa 500 Kubikfuß pro Minute bis etwa 10.000 Kubikfuß pro Minute (etwa 0,24 m³/s bis etwa 4,72 m³/s) umfaßt.

16. Verfahren eines der Ansprüche 1 bis 15, bei dem die Einführung der komprimierten Luft (116) die Zuführung der komprimierten Luft (116) mit einer Geschwindigkeit in dem Bereich von etwa 1.000 Kubikfuß pro Minute bis etwa 3.000 Kubikfuß pro Minute (etwa 0,48 m³/s bis etwa 1,42 m³/s) umfaßt.

17. Verfahren eines der Ansprüche 1 bis 16, bei dem die Einführung der komprimierten Luft (116) in das obere zylindrische Behältnis (103) in einer Richtung erfolgt , die im allgemeinen tangential zu den Innenwandungen (103) des zylindrischen Behältnisses gerichtet ist.

18. Verfahren eines der Ansprüche 1 bis 17, bei dem das obere zylindrische Behältnis (103) einen im wesentlichen konstanten Durchmesser von etwa 1 bis etwa 10 Fuß (etwa 0,3 m bis etwa 3 m) hat und das untere Behältnis (103) eine Kegelstumpfform mit einer maximalen Durchmessergröße an der Grenze zwischen dem unteren Behältnis und dem zylinderischen Behältnis (103) umfaßt und der maximale Durchmesser des unteren Behältnisses (105) im wesentlichen der gleiche wie der Durchmesser des zylindrischen Behältnisses (103) ist.

19. Verfahren des Anspruchs 1, bei dem das Verfahren ferner die Vereinigung wenigstens eines Teils des körnigen Produkts einschließlich des zerkleinerten Lebensmittelprodukts und wenigstens eines anderen verarbeiteten Lebensmittelbestandteils und
die Herstellung eines verarbeiteten Lebensmittelprodukts daraus umfaßt.

## Revendications

1. Procédé de séparation pour aliments traités emballés (102), comprenant les étapes consistant à :
introduire de l'air comprimé (116) dans une enceinte qui comprend une section de forme conique tronquée (105), dans lequel l'air introduit se déplace le long d'un passage descendant à travers l'enceinte comprenant la section conique (105), jusqu'à une extrémité inférieure de celle-ci (112), et l'air atteignant l'extrémité inférieure (112) retourne vers le haut et sort de l'enceinte par l'intermédiaire d'une sortie d'échappement (109) ;
introduire dans l'enceinte les aliments traités emballés (102) comprenant un emballage contenant des aliments, dans lequel les aliments traités emballés (102) sont entraînés dans l'air (116) se déplaçant vers le bas à travers l'enceinte, et dans lequel au moins une partie des aliments est libérée de l'emballage associé et au moins une partie des aliments traités et le matériau d'emballage sont simultanément broyés avant d'atteindre l'extrémité inférieure (112) de l'enceinte ;
décharger un produit granulaire comprenant un produit alimentaire broyé (1130) et des fragments de matériau d'emballage (1131) à partir de l'extrémité inférieure (112) de l'enceinte, dans lequel le produit alimentaire broyé (1130) et les fragments de matériau d'emballage (1131) sont séparés les uns des autres ;
le produit alimentaire broyé (1130) subit une dégradation structurelle moléculaire suffisamment limitée au cours du procédé de sorte que le produit soit acceptable fonctionnellement et de façon organoleptique pour être utilisé en tant que récupération.

2. Procédé selon la revendication 1, dans lequel au moins une partie des de matériau d'emballage déchargés (1131) est recyclable.

3. Procédé selon la revendication 1 ou 2, dans lequel le matériau d'emballage est sélectionné parmi le groupe constitué d'un film barrière, une boîte, un sac, un sachet, un emballage sous film thermo-rétractable, un plateau, et une association quelconque de ceux-ci appropriée pour le procédé de séparation.

4. Procédé selon une quelconque des revendications 1 à 3, dans lequel le matériau d'emballage est sélectionné parmi le groupe constitué de plastique, papier, film métallique, feuille métallique, extrusion à couches multiples, stratifié, revêtement de superposition, et des associations de ceux-ci.

5. Procédé selon une quelconque des revendications 1 à 4, dans lequel les aliments traités (102) sont sélectionnés parmi le groupe constitué de biscuits, biscuits salés, céréales, aliments pour animaux domestiques, desserts, confiseries, et un mélange de ceux-ci.

6. Procédé selon une quelconque des revendications 1 à 5, dans lequel le produit granulaire possède une taille moyenne des particules d'environ 1 micron à environ 1000 microns.

7. Procédé selon une quelconque des revendications 1 à 6, dans lequel le produit granulaire comprend au moins environ 50 % de produit alimentaire broyé possédant une taille moyenne des particules d'environ 1 micron à environ 1000 microns.

8. Procédé selon une quelconque des revendications 1 à 7, dans lequel le produit granulaire comprend des fragments de matériau d'emballage possédant une taille moyenne des particules d'environ 10 mm à environ 30 mm.

9. Procédé selon une quelconque des revendications 1 à 8, dans lequel les aliments traités comprennent un matériau farineux.

10. Procédé selon une quelconque des revendications 1 à 9, lequel le produit alimentaire broyé (1130) et les fragments de matériau d'emballage (1131) sont séparés physiquement les uns des autres en utilisant un tamis (115) à l'extrémité de décharge de l'appareil.

11. Procédé selon une quelconque des revendications 1 à 10, dans lequel l'étape consistant à introduire de l'air comprimé (116) comprend retape consistant à distribuer de l'air comprimé (116) à une pression au sein de la plage d'environ 10 psig à environ 100 psig (environ 0,07 MPa à environ 0,7 MPa).

12. Procédé selon une quelconque des revendications 1 à 11, dans lequel l'étape consistant à introduire de l'air comprimé (116) comprend l'étape consistant à distribuer l'air comprimé (116) à une pression au sein de la plage d'environ 20 psig à environ 40 psig (environ 0, 4 MPa à environ 0,28 MPa).

13. Procédé selon une quelconque des revendications 1 à 12, dans lequel l'étape consistant à introduire de l'air comprimé (16) comprend l'étape consistant à distribuer l'air comprimé (116) à une température au sein de la plage d'environ 0°F à environ 500°F (environ -18°C à environ 260°C),

14. Procédé selon une quelconque des revendications 1 à 13, dans lequel l'étape consistant à introduire de l'air comprimé (116) comprend l'étape consistant à distribuer l'air comprimé (116) à une température au sein de la plage d'environ 40°F (4,4°C) à environ 100°F (37,8°C).

15. Procédé selon une quelconque des revendications 1 à 14, dans lequel l'étape consistant à introduire de l'air comprimé (116) comprend l'étape consistant à distribuer l'air comprimé (116) à un débit au sein de la plage d'environ 500 pieds cubes par minute à environ 10000 pieds cubes par minute (environ 0,24 m³/s à environ 4,72 m³/s).

16. Procédé selon une quelconque des revendications 1 à 15, dans lequel l'étape consistant à introduire de l'air comprimé (116) comprend l'étape consistant à distribuer l'air comprimé (116) à un débit au sein de la plage d'environ 1000 pieds cubes par minute à environ 3000 pieds cubes par minute (environ 0,48 m³/s à environ 1,42 m³/s).

17. Procédé selon une quelconque des revendications 1 à 16, dans lequel l'étape consistant à introduire de l'air comprimé(116) dans l'enceinte cylindrique supérieure (103) se produit dans une direction orientée de façon généralement tangentielle par rapport à des parois intérieures (103) de l'enceinte cylindrique.

18. Procédé selon une quelconque des revendications 1 à 17, dans lequel l'enceinte cylindrique supérieure (103) possède un diamètre sensiblement constant d'environ 1 à environ 10 pieds (environ 0,3 m à environ 3 m), et l'enceinte inférieure (103) comprend une forme conique tronquée possédant un diamètre maximum où l'enceinte inférieure est contiguë à l'enceinte cylindrique (103) et le diamètre maximum de l'enceinte inférieure (105) est sensiblement identique au diamètre de l'enceinte cylindrique (103).

19. Procédé selon la revendication 1, dans lequel le procédé comprend en outre les étapes consistant à associer au moins une partie du produit granulaire, comprenant le produit alimentaire broyé, et au moins un ingrédient alimentaire traité différent ; et préparer un produit alimentaire traité avec ceux-ci.
